# EUROPEAN PATENT APPLICATION

(11) **EP 2 765 330 A2**
(43) Date of publication of application: **13.08.2014**
(21) Application number: 14150558.6
(22) Date of filing: 09.01.2014
(51) Int. Cl.: F16F 15/139, F16F 15/14

(54) **Power transmission apparatus**

(30) Priority: 06.02.2013 JP 2013021813
(71) Applicant: AISIN SEIKI KABUSHIKI KAISHA, Kariya-shi, Aichi 448-8650 (JP)
(72) Inventor: Jimbo, Suguru, Kariya-shi, Aichi 448-8650 (JP); Inoshita, Yoshitaka, Kariya-shi, Aichi 448-8650 (JP); Tone, Makoto, Kariya-shi, Aichi 448-8650 (JP)
(74) Representative: TBK

(57) **Abstract**

A power transmission apparatus (1) includes a first rotation member (4, 6) connected to a first rotation shaft (2, 3), a second rotation member (6, 4) connected to a second rotation shaft (3, 2), a third rotation member (5) provided between the first rotation member and the second rotation member, a damper portion (7) provided between the first rotation member and the third rotation member to absorb a torque fluctuation between the first rotation shaft and the second rotation shaft, a torque limiter portion (8) arranged between the second rotation member and the third rotation member to transmit a torque equal to or smaller than a predetermined value, the torque limiter portion (8) restricting a torque transmitted between the second rotation member (6, 4) and the third rotation member (5) from exceeding the predetermined value in a case where a torque greater than the predetermined value is input to the torque limiter portion, and a dynamic vibration absorber (9) provided at the third rotation member (5).

## Description

### TECHNICAL FIELD

This disclosure generally relates to a power transmission apparatus.

### BACKGROUND DISCUSSION

A known power transmission apparatus disclosed, for example, in JP2011-504986A includes two dampers connected in series with each other and a dynamic vibration absorber formed by a centrifugal force pendulum device provided between the two dampers. The aforementioned power transmission apparatus is provided between an internal combustion engine in a drive train of a vehicle and a transmission, for example, to transmit power between the internal combustion engine and the transmission.

According to the aforementioned power transmission, in a case where a large vibration is input to the dynamic vibration absorber because of resonance of the drive train of the vehicle, for example, component members of the dynamic vibration absorber may collide with one another by a large force.

A need thus exists for a power transmission apparatus in which a dynamic vibration absorber may be protected.

### SUMMARY

According to an aspect of this disclosure, a power transmission apparatus includes a first rotation member connected to a first rotation shaft to be integrally rotatable with the first rotation shaft, a second rotation member connected to a second rotation shaft to be integrally rotatable with the second rotation shaft, a third rotation member provided between the first rotation member and the second rotation member to be integrally rotatable with the first rotation member and the second rotation member, a damper portion provided between the first rotation member and the third rotation member to absorb a torque fluctuation between the first rotation shaft and the second rotation shaft, a torque limiter portion arranged between the second rotation member and the third rotation member to transmit a torque equal to or smaller than a predetermined value between the second rotation member and the third rotation member, the torque limiter portion restricting a torque transmitted between the second rotation member and the third rotation member from exceeding the predetermined value in a case where a torque greater than the predetermined value is input to the torque limiter portion, and a dynamic vibration absorber provided at the third rotation member.

Accordingly, in a case where the torque greater than the predetermined value is input to the torque limiter portion, the torque limiter portion restricts the torque transmitted between the second rotation member and the third rotation member from exceeding the predetermined value. Thus, a relatively large vibration (i.e., a relatively large torque) is restrained from being input to the dynamic vibration absorber, for example. Consequently, the dynamic vibration absorber may be protected, for example.

The damper portion includes a spring absorbing a torque fluctuation between the fist rotation shaft and the second rotation shaft, and the torque limiter portion includes a transmission portion transmitting a torque by friction. One of the transmission portion and the dynamic vibration absorber is provided at an outer side of the other of the transmission portion and the dynamic vibration absorber in a radial direction of the first rotation member.

Accordingly, for example, arrangements of the damper portion and the torque limiter portion may be easily performed.

The transmission portion and the dynamic vibration absorber are provided at an outer side of the spring in the radial direction.

Accordingly, as compared to a case where the transmission portion and the dynamic vibration absorber are positioned at an inner side of the spring in the radial direction, for example, a vibration absorption performance of the dynamic vibration absorber may increase.

The torque limiter portion includes a transmission portion transmitting a torque by friction, one of the dynamic vibration absorber and the transmission portion being arranged at an outer side of the other of the dynamic vibration absorber and the transmission portion in a radial direction of the first rotation member.

Accordingly, for example, arrangements of the dynamic vibration absorber and the torque limiter portion may be easily performed.

The dynamic vibration absorber is positioned at the outer side of the transmission portion in the radial direction.

Accordingly, as compared to a case where the dynamic vibration absorber is arranged at the inner side of the transmission portion in the radial direction, for example, the vibration absorption performance of the dynamic vibration absorber may increase.

The torque limiter portion includes a transmission portion transmitting a torque by friction, and the transmission portion and the dynamic vibration absorber are arranged side by side in an axial direction of the first rotation member.

Accordingly, for example, downsizing of the power transmission apparatus may be achieved.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view of a power transmission apparatus according to a first embodiment disclosed here;
Fig. 2 is a cross-sectional view of the power transmission apparatus according to the first embodiment;
Fig. 3 is a cross-sectional view of the power transmission apparatus according to a second embodiment disclosed here;
Fig. 4 is a cross-sectional view of the power transmission apparatus according to a third embodiment disclosed here;
Fig. 5 is a schematic view of the power transmission apparatus according to a fourth embodiment disclosed here; and
Fig. 6 is a cross-sectional view of the power transmission apparatus according to the fourth embodiment.

### DETAILED DESCRIPTION

First to fourth embodiments will be explained with reference to the attached drawings. The embodiments include similar component members which bear the same numeral references and repeated explanations are omitted.

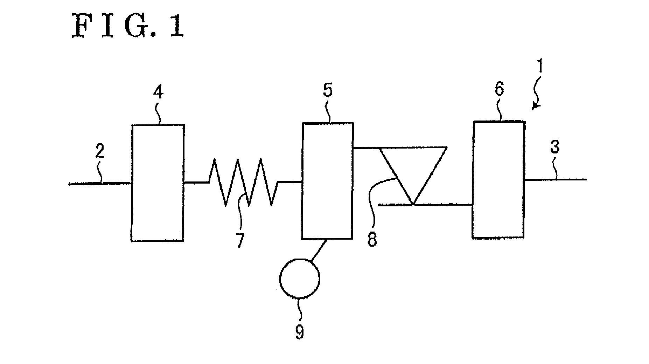

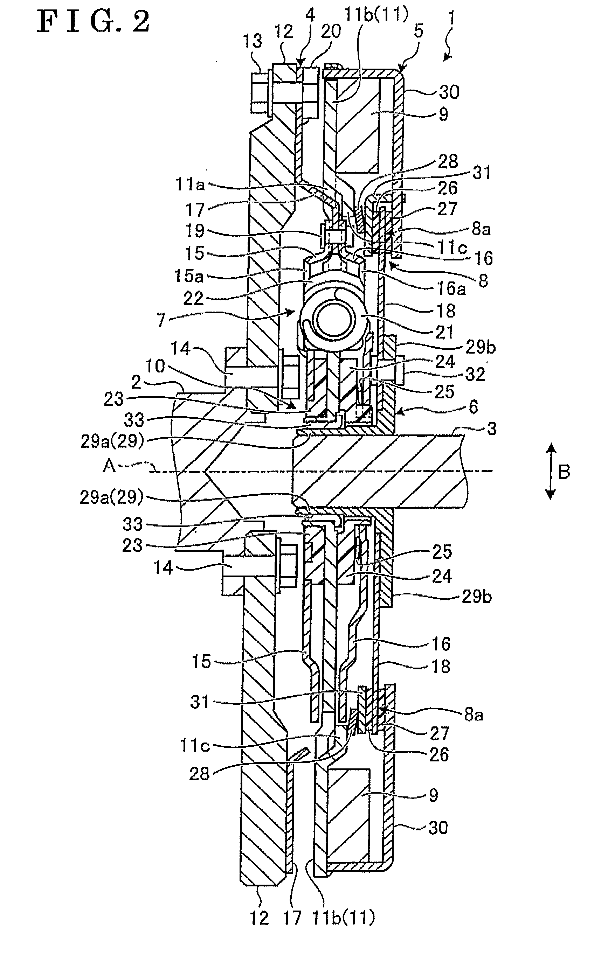

The first embodiment will be explained with reference to Figs. 1 and 2. As illustrated in Figs. 1 and 2, a power transmission apparatus 1 serving as a torque fluctuation absorber is provided, for example, between a power source and a passive portion in a drive train of a vehicle. Specifically, the power transmission apparatus 1 is provided between an output shaft 2 of the power source and an input shaft 3 of the passive portion (i.e., a driven portion) to perform a power transmission between the output shaft 2 and the input shaft 3. The power transmission apparatus 1 includes a function for absorbing, i.e., damping or restraining, torque fluctuation or torsional vibration generated by torsion between the output shaft 2 and the input shaft 3, for example. The power transmission apparatus 1 constitutes, together with the output shaft 2 and the input shaft 3, a power transmission passage. The power source corresponds to an internal combustion engine or an electric motor, for example, and the passive portion corresponds to a transmission or a transaxle, for example, In the present embodiment, the output shaft 2 serves as a first rotation shaft while the input shaft 3 serves as a second rotation shaft. A rotation center axis of the power transmission apparatus 1, a rotation center axis of the output shaft 2, a rotation center axis of the input shaft 3, and a rotation center axis of each rotation member of the power transmission apparatus 1 which will be explained later are coaxial with one another. Thus, the aforementioned rotation center axes will be hereinafter referred to as a rotation axis A as illustrated in Fig. 2. In addition, in the following explanation, a radial direction, a circumferential direction, and an axial direction correspond to a radial direction of a rotation member 4 (i.e., a direction along an arrow B in Fig. 2 and a direction orthogonal to the rotation axis A), a circumferential direction of the rotation member 4 (i.e., a direction around the rotation axis A), and an axial direction of the rotation member 4, respectively, unless otherwise specified.

As illustrated in Fig. 2, the power transmission apparatus 1 includes, for example, three (i.e., plural) rotation members (a mass body, a flywheel mass body, and an inertia body) constituted by rotation members 4, 5 and 6, a damper portion 7, a torque limiter portion 8, a dynamic vibration absorber 9, and a hysteresis portion 10.

The rotation members 4 to 6 are serially connected to one another at the power transmission passage. The rotation member 4 is connected to the output shaft 2 to be integrally rotatable therewith. The rotation member 6 is connected to the input shaft 3 to be integrally rotatable therewith. The rotation member 5 is arranged between the rotation members 4 and 6 to be integrally rotatable therewith. In the first embodiment, the rotation member 4 serves as a first rotation member, the rotation member 6 serves as a second rotation member, and the rotation member 5 serves as a third rotation member.

The damper portion 7 and the hysteresis portion 10 are arranged between the rotation members 4 and 5. The damper portion 7 and the hysteresis portion 10 are provided in parallel with each other at the power transmission passage. The damper portion 7 transmits torque between the rotation members 4 and 5 while absorbing torque fluctuation between the output shaft 2 and the input shaft 3 by elastic deformation. The hysteresis portion 10 damps or restrains the torque fluctuation between the output shaft 2 and the input shaft 3 by hysteresis torque based on friction, for example.

The torque limiter portion 8 is arranged between the rotation members 5 and 6. The torque limiter portion 8 transmits torque equal to or smaller than a predetermined value between the rotation members 5 and 6. In a case where torque greater than the predetermined value is input to the torque limiter portion 8, slippage is generated at the torque limiter portion 8 so that the torque transmitted between the rotation members 5 and 6 is inhibited from exceeding the predetermined value.

The dynamic vibration absorber 9 is provided at the rotation member 5. That is, the dynamic vibration absorber 9 is provided between the damper portion 7 and the torque limiter portion 8. The dynamic vibration absorber 9 integrally rotates with the rotation member 5. The dynamic vibration absorber 9 absorbs or restrains torsional vibration generated between the output shaft 2 and the input shaft 3.

The power transmission apparatus 1 will be explained in detail with reference to Fig. 2.

The rotation member 4 includes single or plural members. For example, the rotation member 4 includes first and second side plates 15 and 16, and an intermediate plate 17. Each of the first and second side plates 15 and 16, and the intermediate plate 17 serves as a plate. The rotation member 4 is connected and fixed to the output shaft 2 via a flywheel 12. An inner circumferential portion of the flywheel 12 is connected to the output shaft 2 by a connection member 14 corresponding to a bolt, for example, The rotation member 4 integrally rotates with the flywheel 12 and the output shaft 2.

Each of the first and second side plates 15 and 16 is formed by an annular member. The first side plate 15 is positioned at a side of the flywheel 12 at which the passive portion (transmission, for example) is provided. That is, the first side plate 15 is arranged at a passive portion side relative to the flywheel 12, i.e., at a right side of the flywheel 12 in Fig. 2. The second side plate 16 is positioned at the passive portion side relative to the first side plate 15. The first and second side plates 15 and 16 are arranged to overlap each other in the axial direction. The first and second side plates 15 and 16 are connected to each other by a connection member 19 corresponding to a rivet, for example, in a state where the intermediate plate 17 is disposed between outer circumferential portions of the first and second side plates 15 and 16 respectively. Thus, the first and second side plates 15 and 16 integrally rotate with the intermediate plate 17. The intermediate plate 17 and the connection member 19 are positioned at an outer side of coil springs 21 which will be explained later in the radial direction. The outer circumferential portions of the first and second side plates 15 and 16 are away from each other by means of the intermediate plate 17. A first thrust member 23 and a second thrust member 24 constituting a portion of the hysteresis portion 10 are provided at inner circumferential portions of the first and second side plates 15 and 16, and a plate 11 in the radial direction.

The first side plate 15 includes window portions 15a while the second side plate 16 includes window portions 16a. The window portions 15a and 16a are provided between the connection member 19 and the rotation axis A, i.e., provided at a radially inner side relative to the connection member 19. Each of the coil springs 21 serving as a biasing member and a spring, and a pair of seat members 22 are accommodated within the window portions 15a and 16a (specifically, a pair of window portions 15a and 16a overlapping in the axial direction). Each of the seat members 22 is disposed between end surfaces of the window portions 15a and 16a in the circumferential direction, and an end portion of the coil spring 21. The end surfaces of the window portions 15a and 16a in the circumferential direction are provided so as to be in contact with and in separation from the seat member 22.

The intermediate plate 17 is connected and fixed to the output shaft 2 via the flywheel 12. The intermediate plate 17 is positioned at the passive portion side of the flywheel 12. An outer circumferential portion of the intermediate plate 17 is fixed and connected to the flywheel 12 by connection members 13 corresponding to bolts, for example, and nuts 20. The plural connection members 13 and the plural nuts 20 are arranged in the circumferential direction. The intermediate plate 17 is in an annular form. Alternatively, the intermediate plate 17 may be provided at each window portion 11a of the plate 11 that will be explained later.

The rotation member 5 includes single or plural members. For example, the rotation member 5 includes the plate 11 serving as a center plate, a plate 30 serving as a cover plate, and a pressure plate 31.

The plate 11 is formed by an annular member positioned at the passive portion side of the flywheel 12. The window portions 11a are formed between an inner circumferential portion and an outer circumferential portion of the plate 11. For example, the plural window portions 11a are formed at intervals in the circumferential direction. The coil spring 21 and the seat members 22 arranged at opposing ends of the coil spring 21 in the circumferential direction are accommodated within each of the window portions 11a. Each of the seat members 22 is arranged between an end surface of the window portion 11 a in the circumferential direction and an end portion of the coil spring 21. The end surface of the window portion 11a in the circumferential direction is provided so as to be in contact with and in separation from the seat member 22. In a case where torsion is generated at the damper portion 7, the plate 11 and the intermediate plate 17 make contact with each other so as to function as a stopper for restricting the torsion of the damper portion 7.

In addition, the plate 11 is disposed and sandwiched between the first and second thrust members 23 and 24 to be slidable in the circumferential direction, i.e., to be rotatable.

Further, the plate 11 is rotatably connected to a cylindrical portion 29a of a hub member 29 via a bearing 33. The bearing 33 rotatably supports the inner circumferential portion of the plate 11 in a state to be fitted and positioned at the radially outer side of the cylindrical portion 29a.

The dynamic vibration absorber 9 is accommodated at a void formed between the plate 11 and the rotation member 5. For example, a cover portion 11b serving as a holding portion and an attachment portion is formed at the outer circumferential portion of the plate 11 so as to cover a portion, i.e., an end surface, of the dynamic vibration absorber 9. The dynamic vibration absorber 9 is attached to or assembled on the cover portion 11b. The cover portion 11b covers the dynamic vibration absorber 9 from a side at which the power source (engine, for example) is provided, i.e., the cover portion 11 b covers the dynamic vibration absorber 9 from a power source side. The dynamic vibration absorber 9 is held, for example, between the rotation member 5 and the cover portion 11 b. A projecting portion 11 c is also formed at the plate 11 to project towards the passive portion side from an end portion of the cover portion 11b at the inner circumferential side thereof.

The plate 30 is formed by an annular member arranged at a position at which the plate 30 covers the plate 11 from the passive portion side. Specifically, the plate 30 covers the passive portion side of the dynamic vibration absorber 9 and an outer circumferential surface of the dynamic vibration absorber 9. The dynamic vibration absorber 9 is positioned between the plates 11 and 30 to be covered thereby. Outer circumferential portions of the plates 11 and 30 are connected and fixed to each other by welding, for example.

The pressure plate 31 is formed by an annular member. The pressure plate 31 covers a surface of the plate 30 at the power source side. The pressure plate 31 is connected to the plate 30 or the plate 11 to be relatively non-rotatable and axially movable.

The damper portion 7 includes the coil springs 21 and the seat members 22. The coil springs 21 and the seat members 22 are accommodated within the window portions 11 a, 15a, and 16a formed at the plate 11 and the first and second side plates 15 and 16 respectively.

Each of the coil springs 21 is in contact with the seat members 22 arranged at the opposing ends of the coil spring 21 in the circumferential direction. The coil springs 21 are disposed, in the aforementioned manner, between the plate 11 and the first and second side plates 15 and 16. The damper portion 7 transmits torque between the rotation members 4 and 5 and absorbs torque fluctuation between the output shaft 2 and the input shaft 3 by the elastic deformation of each of the coil springs 21. Specifically, the coil springs 21 allow a relative rotation between the plate 11 and the first and second side plates 15 and 16 within a predetermined range and contract by the relative rotation between the plate 11 and the first and second side plates 15 and 16 to absorb shock caused by rotation difference between the plate 11 and the first and second side plates 15 and 16. Each of the coil springs 21 may be formed in a straight shape, formed by a straight-shaped coil spring that is curved in the circumferential direction of the rotation member 4 for assembly, or by an arc spring curved in the circumferential direction of the rotation member 4, for example.

Each of the seat members 22 may be made of synthetic resin material, for example. Thus, abrasion of the coil spring 21 may decrease. At this time, however, the seat member 22 may be made of other material than synthetic resin material, for example, the seat member 22 may be made of metallic material.

The hysteresis portion 10 includes the first and second thrust members 23 and 24, and a disc spring 25.

Each of the first and second thrust members 23 and 24 is formed by an annular member. The first and second thrust members 23 and 24 are arranged at an inner side of the coil springs 21 of the damper portion 7 in the radial direction. In addition, the first and second thrust members 23 and 24 face an end portion of the plate 11 at the inner circumferential side in the axial direction. The first thrust member 23 is arranged at the power source side of the plate 11 to be disposed between the plate 11 and the first side plate 15 in the axial direction. The first thrust member 23 is engaged or connected relative to the first side plate 15 to be relatively non-rotatable and axially movable. The second thrust member 24 is arranged at the passive portion side of the plate 11 to be disposed between the plate 11 and the second side plate 16 in the axial direction. The second thrust member 24 is engaged or connected relative to the second side plate 16 to be relatively non-rotatable and axially movable. The disc spring 25 is disposed between the second thrust member 24 and the second side plate 16, for example, so as to bias the second thrust member 24 towards the plate 11. Because of the biasing force of the disc spring 25, the pair of thrust members, i.e., the first and second thrust members 23 and 24, is in pressure contact with the plate 11. At this time, the first and second thrust members 23 and 24 are slidable relative to the plate 11 in the circumferential direction. The hysteresis portion 10 damps or restrains torque fluctuation between the output shaft 2 and the input shaft 3 by hysteresis torque based on friction, for example, generated between the first and second thrust members 23 and 24, and the plate 11. The first thrust member 23 is also arranged between the first side plate 15 and the plate 11 in the radial direction so as to function as a sliding bearing, i.e., a bush for allowing a relative rotation between the first side plate 15 and the plate 11.

The rotation member 6 includes single or plural members. For example, the rotation member 6 includes the hub member 29 and a lining plate 18 serving as the plate.

The hub member 29 is formed by an annular member. The hub member 29 includes the cylindrical portion 29a and a flange portion 29b. The input shaft 3 is inserted to the cylindrical portion 29a so that the input shaft 3 is spline-fitted to an inner peripheral surface of the cylindrical portion 29a, i.e., the input shaft 3 is fitted to the cylindrical portion 29a to be relatively non-rotatable and axially movable. Accordingly, the hub member 29 integrally rotates with the input shaft 3.

The flange portion 29b extends outwardly in the radial direction from an end of the cylindrical portion 29a at the passive portion side. The flange portion 29b is positioned at the passive portion side of the damper portion 7 and the hysteresis portion 10.

The lining plate 18 is formed by an annular member. The lining plate 18 is connected to the flange portion 29b of the hub member 29 by a connection member 32 corresponding to a rivet, for example. A first friction member 26 is positioned at the power source side of an outer circumferential portion of the lining plate 18 while a second friction member 27 is positioned at the passive portion side of the outer circumferential portion of the lining plate 18. Accordingly, the lining plate 18 is arranged between the pair of friction members, i.e., between the first and second friction members 26 and 27 in the axial direction.

The torque limiter portion 8 includes the lining plate 18, the pair of friction members, i.e.. the first and second friction members 26 and 27, a disc spring 28, and the pressure plate 31.

Each of the first and second friction members 26 and 27 is formed by an annular member. The first and second friction members 26 and 27 are positioned at the outer side of the coil springs 21 (i.e., the damper portion 7) in the radial direction to face the lining plate 18 in the axial direction. The first friction member 26 is positioned at the power source side of the lining plate 18 to be disposed between the lining plate 18 and the pressure plate 31 in the axial direction. The first friction member 26 is held or connected relative to the pressure plate 31 to be relatively non-rotatable. For example, the first friction member 26 is held by the pressure plate 31 by means of a fitting structure including a projection and a bore. On the other hand, the second friction member 27 is positioned at the passive portion side of the lining plate 18 to be disposed between the lining plate 18 and the plate 30 in the axial direction. The second friction member 27 is held or connected relative to the plate 30 to be relatively non-rotatable. For example, the second friction member 27 is held by the plate 30 by means of a fitting structure including a projection and a bore. At this time, the first and second friction members 26 and 27 may not be held by the pressure plate 31 and the plate 30 respectively and may be held by the lining plate 18 to be relatively non-rotatable. Each of the first and second friction members 26 and 27 may be made of a material including rubber, synthetic resin, fibers (short fibers or long fibers), and particles for friction coefficient adjustment, for example.

The disc spring 28 is arranged between the plate 11 and the pressure plate 31, for example, to bias the first friction member 26 towards the lining plate 18. For example, the disc spring 28 is disposed between the projecting portion 11c of the plate 11 and the pressure plate 31. Because of the biasing force of the disc spring 28, the first and second friction members 26 and 27 are in pressure contact with the lining plate 18. The torque limiter portion 8 transmits torque equal to or smaller than the predetermined value between the rotation members 5 and 6. At this time, the first and second friction members 26 and 27, and the lining plate 18 integrally rotate with one another without slippage. On the other hand, in a case where torque greater than the predetermined value is input to the torque limiter portion 8, slippage is generated among the first and second friction members 26 and 27 and the lining plate 18 so that the torque limiter portion 8 restricts the torque transmitted between the rotation members 5 and 6 from exceeding the predetermined value. Facing areas, i.e., contact areas, of the first and second friction members 26 and 27 relative to the lining plate 18 in the axial direction form a transmission portion 8a transmitting torque by means of friction. Torque transmission is also performed between the disc spring 28 and both the plate 30 and the pressure plate 31.

The dynamic vibration absorber 9 is in an annular form, for example. The dynamic vibration absorber 9 is configured to accommodate a rolling element serving as a centrifugal force pendulum in a chamber, for example. In the aforementioned configuration, at a time of the rotation of the output shaft 2 (i.e., of the flywheel 12), for example, the rolling element rolls within the chamber by resonating with torsional vibration including a predetermined degree of a power transmission system. Then, the torsional vibration may be absorbed by dynamic vibration absorption performance in association with the rolling of the rolling element. The dynamic vibration absorber 9 is not limited to include the aforementioned configuration and may include a spring or a damper portion, for example.

According to the present embodiment, one of the dynamic vibration absorber 9 and the transmission portion 8a of the torque limiter portion 8 is positioned at the outer side of the other of the dynamic vibration absorber 9 and the transmission portion 8a of the torque limiter portion 8 in the radial direction. For example, in the present embodiment, the dynamic vibration absorber 9 is positioned at the radially outer side of the transmission portion 8a.

In the present embodiment, one of the torque limiter portion 8 (the transmission portion 8a) and the damper portion 7 (the coil springs 21) is positioned at the radially outer side of the other of the torque limiter portion 8 (the transmission portion 8a) and the damper portion 7 (the coil springs 21). In addition, one of the dynamic vibration absorber 9 and the damper portion 7 (the coil springs 21) is positioned at the radially outer side of the other of the dynamic vibration absorber 9 and the damper portion 7 (the coil springs 21). Specifically, in the present embodiment, the torque limiter portion 8 and the dynamic vibration absorber 9 are positioned at the radially outer side of the coil springs 21. At this time, however, the torque limiter portion 8 and the dynamic vibration absorber 9 may be positioned at the radially inner side of the coil springs 21.

In the power transmission apparatus 1 including the aforementioned configuration, torque transmission, i.e., power transmission, is performed between the output shaft 2 (the flywheel 12) and the input shaft 3. For example, the power transmission apparatus 1 transmits torque of the output shaft 2 (i.e., of the flywheel 12) to the input shaft 3, and torque of the input shaft 3 to the output shaft 2. At this time, the damper portion 7 absorbs torque fluctuation between the output shaft 2 and the input shaft 3 by the elastic deformation of the damper portion 7. In addition, the hysteresis portion 10 damps or restrains the torque fluctuation between the output shaft 2 and the input shaft 3 by hysteresis torque based on friction, for example. Further, the dynamic vibration absorber 9 absorbs torsional vibration that is generated between the output shaft 2 and the input shaft 3. In a case where torque exceeding the predetermined value is input to the torque limiter portion 8, the torque limiter portion 8 generates slippage to restrict the torque transmitted between the rotation members 5 and 6 from exceeding the predetermined value. Specifically, the torque limiter portion 8 restricts torque transmission from the rotation member 5 to the rotation member 6 or torque transmission from the rotation member 6 to the rotation member 5. Accordingly, a relatively large vibration, i.e., a relatively large torque, is inhibited from being input to the dynamic vibration absorber 9.

According to the first embodiment, the damper portion 7 is provided between the rotation members 4 and 5, the dynamic vibration absorber 9 is provided at the rotation member 5, and the torque limiter portion 8 is provided between the rotation members 5 and 6. Thus, in a case where the torque limiter portion 8 receives the torque greater than the predetermined value because of resonance of the drive train of the vehicle, for example, the torque limiter portion 8 restricts the torque transmitted between the rotation members 5 and 6 from exceeding the predetermined value. Thus, a relatively large vibration, i.e., a relatively large torque, may be restrained from being input to the dynamic vibration absorber 9. As a result, in the present embodiment, the dynamic vibration absorber 9 may be protected and further a long life span of the dynamic vibration absorber 9 may be achieved.

In addition, according to the first embodiment, in a case where the dynamic vibration absorber 9 is formed by a centrifugal force pendulum device, the torque limiter portion 8 restricts the torque transmitted between the rotation members 5 and 6 from exceeding the predetermined value so that a relatively large vibration is restrained from being input to the rolling element serving as the centrifugal force pendulum. An increase of vibration of the rolling element that causes a collision between the rolling element and other members in the dynamic vibration absorber 9 by a large force may be restrained. Further, because a collision between the rolling element and the other members in the dynamic vibration absorber 9 by a large force resulting from the increase of vibration of the rolling element is restrained, the rolling element may be protected. An abnormal noise caused by a contact between the rolling element and the other members in the dynamic vibration absorber 9 may be restrained. Because the dynamic vibration absorber 9 is protected in the aforementioned manner, a thickness of an attachment member of the rolling element, for example, in a case where the dynamic vibration absorber 9 is formed by the centrifugal force pendulum device, may be reduced, which may lead to downsizing of the dynamic vibration absorber 9.

Further, according to the first embodiment, the torque limiter portion 8 includes the transmission portion 8a transmitting the torque by friction, and one of the dynamic vibration absorber 9 and the transmission portion 8a is positioned at the outer side of the other of the dynamic vibration absorber 9 and the transmission portion 8a in the radial direction. Therefore, arrangements of the dynamic vibration absorber 9 and the torque limiter portion 8 may be easily performed, for example.

Furthermore, according to the first embodiment, the dynamic vibration absorber 9 is positioned at the radially outer side of the transmission portion 8a. Thus, as compared to a case where the dynamic vibration absorber 9 is positioned at a side closer to the rotation axis A relative to the transmission portion 8a, for example, the vibration absorption performance of the dynamic vibration absorber 9 may increase.

In addition, in the present embodiment, one of the torque limiter portion 8 (the transmission portion 8a) and the damper portion 7 (the coil springs 21) is positioned at the radially outer side of the other of the torque limiter portion 8 (the transmission portion 8a) and the damper portion 7 (the coil springs 21). Then, one of the dynamic vibration absorber 9 and the damper portion 7 (the coil springs 21) is positioned at the radially outer side of the other of the dynamic vibration absorber 9 and the damper portion 7 (the coil springs 21). Thus, arrangements of the damper portion 7 and the torque limiter portion 8, for example, may be easily performed.

Further, in the present embodiment, the transmission portion 8a and the dynamic vibration absorber 9 are positioned at the radially outer side of the coil springs 21. Thus, as compared to a case where the transmission portion 8a and the dynamic vibration absorber 9 are positioned at the radially inner side of the coil springs 21, for example, the vibration absorption performance of the dynamic vibration absorber 9 may increase.

Furthermore, in the first embodiment, the torque limiter portion 8 includes a relatively simple configuration including the first and second friction members 26 and 27, and the disc spring 28. Thus, the dynamic vibration absorber 9 may be protected while a complex configuration of the power transmission apparatus 1 is restrained.

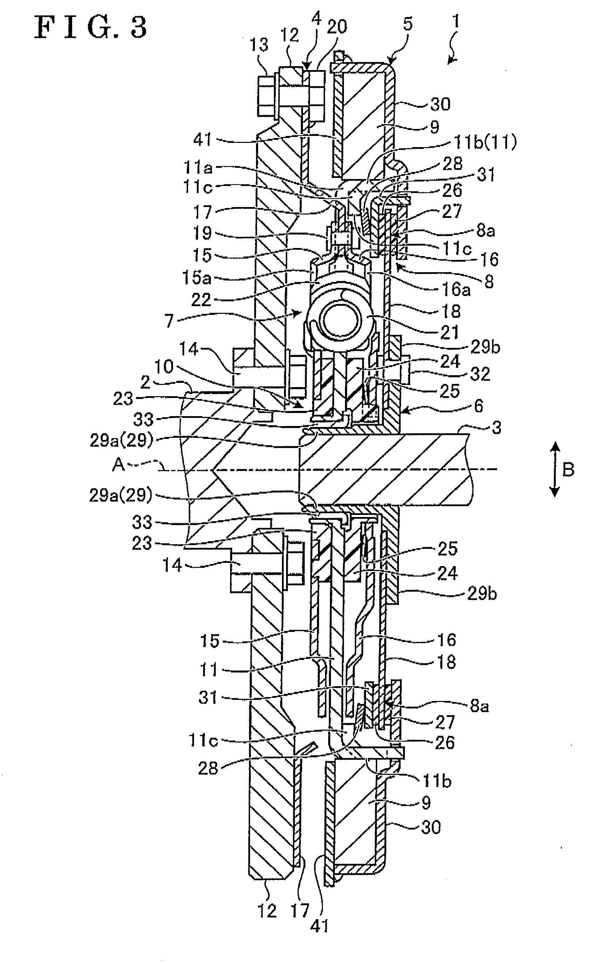

The second embodiment will be explained with reference to Fig. 3. As illustrated in Fig. 3, in the second embodiment, the configuration of the rotation member 5 is mainly different from that of the first embodiment. According to the second embodiment, the rotation member 5 includes a plate 41 in addition to the plates 11 and 30 and the pressure plate 31.

The outer peripheral portion of the plate 11 in the second embodiment is bent to the passive portion side so that the cover portion 11b is formed in a cylindrical form. The cover portion 11b covers an end portion, i.e., an end surface, of the dynamic vibration absorber 9 at the inner circumferential side. The dynamic vibration absorber 9 is provided at the outer circumferential side of the plate 11.

The plate 41 formed by an annular member is provided at the outer circumferential side of the plate 11. The plate 41 covers the power source side of the dynamic vibration absorber 9. The plate 41 is fixed to the plate 30 by welding, for example.

The dynamic vibration absorber 9 is covered by the cover portion 11b of the plate 11 and the plates 30 and 41. The cover portion 11 b of the plate 11 and the plates 30 and 41 form an accommodation portion, i.e., a holding portion, accommodating the dynamic vibration absorber 9. The dynamic vibration absorber 9 is held by the cover portion 11b of the plate 11 and the plates 30 and 41 so as to be secured by means of a connection member corresponding to a screw, for example, or by adhesion.

According to the aforementioned configuration of the second embodiment, the dynamic vibration absorber 9 may be protected in the same way as the first embodiment.

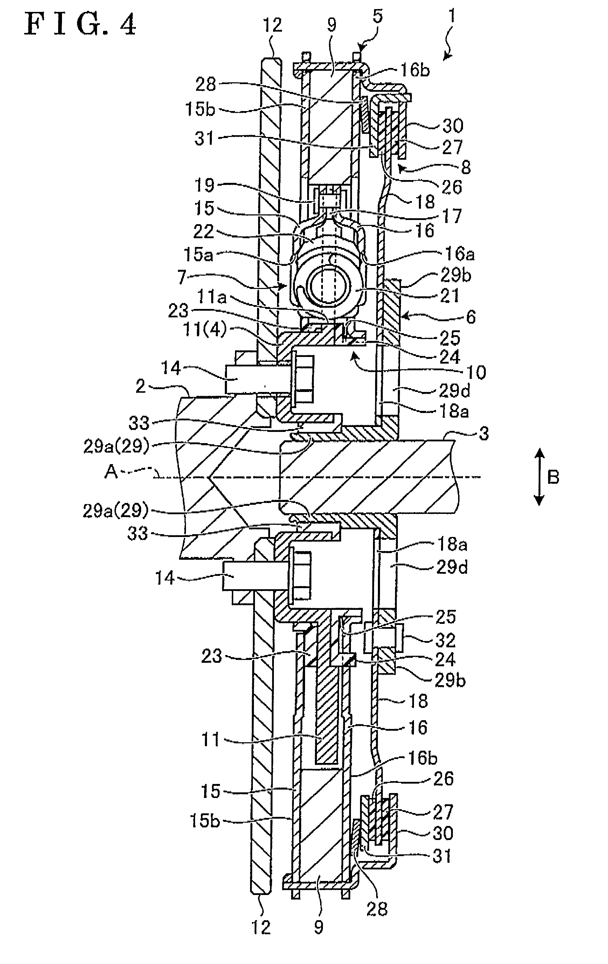

The third embodiment will be explained with reference to Fig. 4. As illustrated in Fig. 4, in the third embodiment, the positions of the torque limiter portion 8 and the dynamic vibration absorber 9 and the configurations of the rotation members 4 to 6 are mainly different from those of the first embodiment.

In the third embodiment, the torque limiter portion 8 (the transmission portion 8a) and the dynamic vibration absorber 9 are arranged side by side in the axial direction. For example, the dynamic vibration absorber 9 is positioned at the power source side of the torque limiter portion 8. The torque limiter portion 8 and the dynamic vibration absorber 9 are arranged at the radially outer side of the coil springs 21. In addition, the dynamic vibration absorber 9 and the damper portion 7 are arranged side by side in the radial direction.

The rotation member 4 includes, for example, the plate 11 and the connection member 14. The inner circumferential portion of the plate 11 is connected and fixed, together with the flywheel 12, to the output shaft 2 by the connection member 14. The plate 11 is rotatably connected to the cylindrical portion 29a of the hub member 29 via the bearing 33. The bearing 33 rotatably supports the inner circumferential portion of the plate 11 in a state to be fitted and positioned at the radially outer side of the cylindrical portion 29a.

The rotation member 5 includes the first and second side plates 15 and 16, the intermediate plate 17, and the plate 30.

The dynamic vibration absorber 9 is provided between the first and second side plates 15 and 16. First and second cover portions 15b and 16b each serving as a holding portion for covering the dynamic vibration absorber 9 are formed at the outer circumferential portions of the first and second side plates 15 and 16 respectively. The first cover portion 15b covers the power source side of the dynamic vibration absorber 9 and the second cover portion 16b covers the passive portion side of the dynamic vibration absorber 9.

The plate 30 covers the outer circumferential surface of the dynamic vibration absorber 9 and the passive portion side of the second side plate 16. The plate 30 is connected to the first and second side plates 15 and 16. For example, the plate 30 is welded to the first side plate 15.

The disc spring 28 of the torque limiter portion 8 is disposed between the second cover portion 16b of the second side plate 16 and the pressure plate 31.

The rotation member 6 includes the hub member 29 and the lining plate 18 in the same way as the first embodiment. A bore 29d serving as an opening portion is formed at the flange portion 29b of the hub member 29. In addition, a bore 18a serving as the opening portion is formed at the lining plate 18 so as to be connected to the bore 29d of the flange portion 29b. The bores 29d and 18a are formed at positions overlapping the connection member 14 in the axial direction. Specifically, the bores 29d and 18a are formed at positions overlapping the connection member 14 in the axial direction in a case where torsion is not generated at the damper portion 7. The bores 18a and 29d are provided so as to allow the connection member 14 to pass through the bores 18a and 29d and a usage of a tool for the connection member 14.

According to the aforementioned configuration of the third embodiment, the dynamic vibration absorber 9 may be protected in the same way as the first embodiment.

In addition, the dynamic vibration absorber 9 and the damper portion 7 are arranged side by side in the radial direction. Therefore, the thickness of the power transmission apparatus 1 in the axial direction may be reduced, for example.

Further, the torque limiter portion 8 (the transmission portion 8a) and the dynamic vibration absorber 9 are arranged side by side in the axial direction. Thus, downsizing of the power transmission apparatus 1 may be achieved, for example.

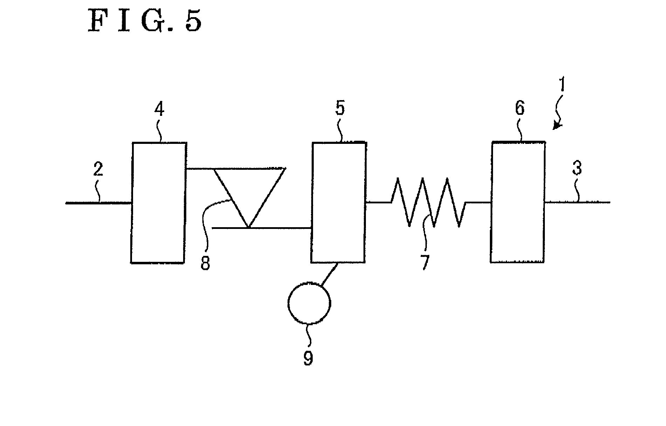

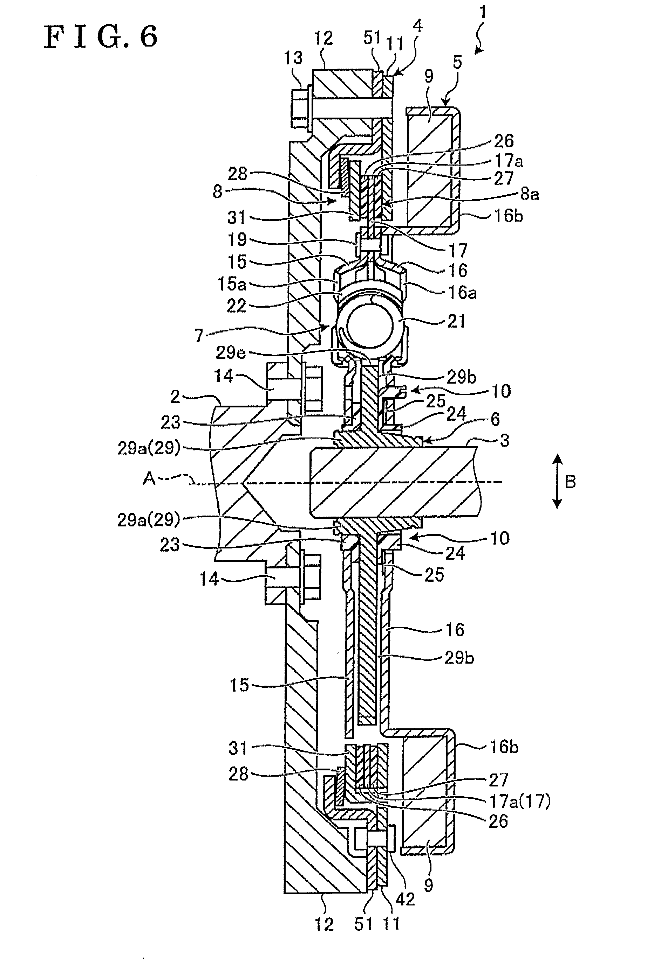

The fourth embodiment will be explained with reference to Figs. 5 and 6. In the fourth embodiment, as illustrated in Fig. 5, the arrangements of the damper portion 7, the hysteresis portion 10 (see Fig. 6), and the torque limiter portion 8 are different from those of the first embodiment. In addition, the configurations of the rotation members 4 to 6 are different from those of the first embodiment.

In the fourth embodiment, the damper portion 7 and the hysteresis portion 10 are arranged between the rotation members 5 and 6, and the torque limiter portion 8 is arranged between the rotation members 4 and 5. The dynamic vibration absorber 9 is provided at the rotation member 5 in the same way as the first embodiment. In the fourth embodiment, the rotation member 6 serves as the first rotation member, the rotation member 4 serves as the second rotation member, and the rotation member 5 serves as the third rotation member. In addition, the input shaft 3 serves as the first rotation shaft and the output shaft 2 serves as the second rotation shaft. As understood from the fourth embodiment and the first to third embodiments, one of the first rotation shaft and the second rotation shaft is the output shaft 2 of the power source, and the other of the first rotation shaft and the second rotation shaft is the input shaft 3 of the passive portion, for example.

As illustrated in Fig. 6, the rotation member 4 includes the plate 11, a plate 51, and the pressure plate 31. The plate 51 is formed by an annular member positioned at a side of the plate 11 facing the flywheel 12, i.e., positioned at the power source side of the plate 11. That is, the plate 51 is arranged between the flywheel 12 and the plate 11. The plates 11 and 51 are arranged to overlap each other in the axial direction and are connected and fixed to each other by connection members 42 corresponding to rivets, for example. The plural connection members 42 are arranged in the circumferential direction. The plates 11 and 51 are connected to the flywheel 12 by the connection members 13.

The pressure plate 31 covers a surface of the plate 11 at the power source side. The pressure plate 31 is positioned between the plates 11 and 51. The pressure plate 31 is connected to the plate 11 to be relatively non-rotatable and axially movable.

The rotation member 5 includes the first and second side plates 15 and 16, and the intermediate plate 17. In the fourth embodiment, the intermediate plate 17 is inhibited from being fixed to the flywheel 12. A lining portion 17a is formed at the outer circumferential portion of the intermediate plate 17. The lining portion 17a of the fourth embodiment corresponds to the lining plate 18 of the first embodiment.

The second cover portion 16b in an annular form is formed at the second side plate 16. The second cover portion 16b is positioned, for example, at the radially outer side of the damper portion 7 (the coil springs 21). In addition, the second cover portion 16b is formed in a recess that opens at the power source side. The dynamic vibration absorber 9 in an annular form is accommodated within the recess portion of the second cover portion 16b so that the second cover portion 16b covers a portion of the dynamic vibration absorber 9. The dynamic vibration absorber 9 is assembled on the second cover portion 16b.

The rotation member 6 includes the hub member 29. In the fourth embodiment, the lining plate 18 is not formed at the rotation member 6. A window portion 29e is formed at the hub member 29.

The torque limiter portion 8 according to the fourth embodiment transmits torque equal to or smaller than the predetermined value between the rotation members 4 and 5. In a case where torque greater than the predetermined value is input to the torque limiter portion 8, slippage is generated at the torque limiter portion 8 to restrict the torque transmitted between the rotation members 4 and 5 from exceeding the predetermined value.

In the fourth embodiment, the torque limiter portion 8 includes the lining portion 17a instead of the lining plate 18 as in the first embodiment. The first and second friction members 26 and 27 of the torque limiter portion 8 are positioned at the radially outer side of the coil springs 21 (the damper portion 7) to face the lining portion 17a in the axial direction. The first friction member 26 is positioned at the power source side of the lining portion 17a to be disposed between the lining portion 17a and the pressure plate 31 in the axial direction. The first friction member 26 is held or connected to the pressure plate 31 to be relatively non-rotatable. For example, the first friction member 26 may be held at the pressure plate 31 by means of a fitting structure including a projection and a bore. On the other hand, the second friction member 27 is positioned at the passive portion side of the lining portion 17a to be disposed between the lining portion 17a and the plate 11 in the axial direction. The second friction member 27 is held or connected to the plate 11 to be relatively non-rotatable. For example, the second friction member 27 is held by the plate 11 by means of a fitting structure including a projection and a bore. At this time, the first and second friction members 26 and 27 may not be held by the pressure plate 31 and the plate 11 respectively and may be held by the intermediate plate 17 (the lining portion 17a) to be relatively non-rotatable. Facing areas, i.e., contact areas, of the first and second friction members 26 and 27 relative to the lining portion 17a in the axial direction form the transmission portion 8a transmitting torque by friction.

The disc spring 28 of the torque limiter portion 8 is disposed, for example, between the plate 51 and the pressure plate 31 to bias the first friction member 26 towards the lining portion 17a. Because of the biasing force of the disc spring 28, the first and second friction members 26 and 27 are in pressure contact with the lining portion17a.

The damper portion 7 according to the fourth embodiment absorbs torque fluctuation between the output shaft 2 and the input shaft 3 by the elastic deformation so as to transmit torque between the rotation members 5 and 6. In the damper portion 7, each of the coil springs 21 and the seat members 22 arranged at the opposing ends of the coil spring 21 in the circumferential direction are accommodated within the window portions 15a, 16a, and 29e formed at the first and second side plates 15 and 16, and the hub member 29 respectively. The coil springs 21 are disposed between the first and second side plates 15 and 16, and the hub member 29. The damper portion 7 transmits the torque between the rotation members 5 and 6 and absorbs the torque fluctuation between the output shaft 2 and the input shaft 3 by the elastic deformation of the coil springs 21. Specifically, the coil springs 21 allow the relative rotation between the first and second side plates 15 and 16, and the hub member 29 within a predetermined range and contract by the relative rotation between the first and second side plates 15 and 16, and the hub member 29 to thereby absorb shock caused by a rotational difference between the first and second side plates 15 and 16, and the hub member 29.

In the hysteresis portion 10 of the fourth embodiment, the first and second thrust members 23 and 24 are positioned at the radially inner side of the coil springs 21 (the damper portion 7) to face the flange portion 29b of the hub member 29 in the axial direction. The first thrust member 23 is positioned at the power source side of the flange portion 29b to be disposed between the flange portion 29b and the first side plate 15 in the axial direction. The first thrust member 23 is engaged or connected to the first side plate 15 to be relatively non-rotatable and axially movable. On the other hand, the second thrust member 24 is positioned at the passive portion side of the flange portion 29b to be disposed between the flange portion 29b and the second side plate 16 in the axial direction. The second thrust member 24 is engaged or connected to the second side plate 16 to be relatively non-rotatable and axially movable. The disc spring 25 is disposed, for example, between the second thrust member 24 and the second side plate 16 to bias the second thrust member 24 towards the flange portion 29b. Because of the biasing force of the disc spring 25, the pair of thrust members, i.e., the first and second thrust members 23 and 24, is in pressure-contact with the flange portion 29b. At this time, the first and second thrust members 23 and 24 are slidable relative to the flange portion 29b in the circumferential direction. The hysteresis portion 10 damps or restrains the torque fluctuation between the output shaft 2 and the input shaft 3 by the hysteresis torque based on, for example, friction generated between the first and second thrust members 23 and 24, and the flange portion 29b. The first thrust member 23 is also disposed between the first side plate 15 and the flange portion 29b in the radial direction to function as a sliding bearing, i.e., a bush for allowing a relative rotation between the first side plate 15 and the flange portion 29b.

In the forth embodiment, the torque limiter portion 8 (the transmission portion 8a) and the dynamic vibration absorber 9 are arranged side by side in the axial direction. For example, the dynamic vibration absorber 9 is positioned at the passive portion side of the torque limiter portion 8. The torque limiter portion 8 and the dynamic vibration absorber 9 are positioned at the radially outer side of the coil springs 21. In addition, the torque limiter portion 8 and the damper portion 7 are arranged side by side in the radial direction.

As mentioned above, in the fourth embodiment, the damper portion 7 is provided between the rotation members 5 and 6, the dynamic vibration absorber 9 is provided at the rotation member 5, and the torque limiter portion 8 is provided between the rotation members 4 and 5. Thus, in a case where the torque limiter portion 8 receives the torque greater than the predetermined value because of resonance of the drive train of the vehicle, for example, the torque limiter portion 8 restricts the torque transmitted between the rotation members 4 and 5 from exceeding the predetermined value. Thus, a relatively large vibration may be restrained from being input to the dynamic vibration absorber 9. As a result, in the present embodiment, the dynamic vibration absorber 9 may be protected and further a long life span of the dynamic vibration absorber 9 may be achieved.

In addition, in the fourth embodiment, the transmission portion 8a of the torque limiter portion 8 and the dynamic vibration absorber 9 are positioned at the radially outer side of the coil springs 21. Thus, the arrangements of the damper portion 7 and the torque limiter portion 8, for example, may be easily performed.

Further, in the fourth embodiment, the transmission portion 8a and the dynamic vibration absorber 9 are positioned at the radially outer side of the coil springs 21. Thus, as compared to a case where the transmission portion 8a and the dynamic vibration absorber 9 are positioned at the radially inner side of the coil springs 21, for example, the vibration absorption performance of the dynamic vibration absorber 9 may increase.

Furthermore, in the fourth embodiment, the torque limiter portion 8 and the damper portion 7 are arranged side by side in the radial direction. Thus, the thickness of the power transmission apparatus 1 in the axial direction may be reduced, for example,

Furthermore, in the fourth embodiment, the torque limiter portion 8 (the transmission portion 8a) and the dynamic vibration absorber 9 are arranged side by side in the axial direction. Thus, downsizing of the power transmission apparatus 1 may be achieved, for example,

The first to fourth embodiments are not limited to include the aforementioned configurations and may be appropriately modified or changed.

A power transmission apparatus (1) includes a first rotation member (4, 6) connected to a first rotation shaft (2, 3), a second rotation member (6, 4) connected to a second rotation shaft (3, 2), a third rotation member (5) provided between the first rotation member and the second rotation member, a damper portion (7) provided between the first rotation member and the third rotation member to absorb a torque fluctuation between the first rotation shaft and the second rotation shaft, a torque limiter portion (8) arranged between the second rotation member and the third rotation member to transmit a torque equal to or smaller than a predetermined value, the torque limiter portion (8) restricting a torque transmitted between the second rotation member (6, 4) and the third rotation member (5) from exceeding the predetermined value in a case where a torque greater than the predetermined value is input to the torque limiter portion, and a dynamic vibration absorber (9) provided at the third rotation member (5).

## Claims

1. A power transmission apparatus (1) comprising:
a first rotation member (4, 6) connected to a first rotation shaft (2, 3) to be integrally rotatable with the first rotation shaft (2, 3);
a second rotation member (6, 4) connected to a second rotation shaft (3, 2) to be integrally rotatable with the second rotation shaft (3, 2);
a third rotation member (5) provided between the first rotation member (4, 6) and the second rotation member (6, 4) to be integrally rotatable with the first rotation member (4, 6) and the second rotation member (6, 4);
a damper portion (7) provided between the first rotation member (4, 6) and the third rotation member (5) to absorb a torque fluctuation between the first rotation shaft (2, 3) and the second rotation shaft (3, 2);
a torque limiter portion (8) arranged between the second rotation member (6, 4) and the third rotation member (5) to transmit a torque equal to or smaller than a predetermined value between the second rotation member (6, 4) and the third rotation member (5), the torque limiter portion (8) restricting a torque transmitted between the second rotation member (6, 4) and the third rotation member (5) from exceeding the predetermined value in a case where a torque greater than the predetermined value is input to the torque limiter portion (8); and
a dynamic vibration absorber (9) provided at the third rotation member (6, 4).

2. The power transmission apparatus (1) according to claim 1, wherein the damper portion (7) includes a spring (21) absorbing a torque fluctuation between the fist rotation shaft (2, 3) and the second rotation shaft (3, 2), and the torque limiter portion (8) includes a transmission portion (8a) transmitting a torque by friction, and wherein one of the transmission portion (8a) and the dynamic vibration absorber (9) is provided at an outer side of the other of the transmission portion (8a) and the dynamic vibration absorber (9) in a radial direction of the first rotation member (4, 6).

3. The power transmission apparatus (1) according to claim 2, wherein the transmission portion (8a) and the dynamic vibration absorber (9) are provided at an outer side of the spring (21) in the radial direction.

4. The power transmission apparatus (1) according to claim 1, wherein the torque limiter portion (8) includes a transmission portion (8a) transmitting a torque by friction, one of the dynamic vibration absorber (9) and the transmission portion (8a) being arranged at an outer side of the other of the dynamic vibration absorber (9) and the transmission portion (8a) in a radial direction of the first rotation member (4, 6).

5. The power transmission apparatus (1) according to claim 4, wherein the dynamic vibration absorber (9) is positioned at the outer side of the transmission portion (8a) in the radial direction.

6. The power transmission apparatus (1) according to claim 1, wherein the torque limiter portion (8) includes a transmission portion (8a) transmitting a torque by friction, and the transmission portion (8a) and the dynamic vibration absorber (9) are arranged side by side in an axial direction of the first rotation member (4, 6).
